# EUROPÄISCHE PATENTANMELDUNG

(11) **EP 2 026 445 A2**
(43) Veröffentlichungstag der Anmeldung: **18.02.2009**
(21) Anmeldenummer: 08104933.0
(22) Anmeldetag: 31.07.2008
(51) Int. Cl.: H02K 1/14, H02K 1/27

(54) **Synchronmaschine mit reduzierter Drehmomentwelligkeit**

(30) Priorität: 17.08.2007 DE 102007038904
(71) Anmelder: Continental Automotive GmbH, 30165 Hannover (DE)
(72) Erfinder: Junak, Jacek, Dr., 97209 Veitshöchheim (DE); Ombach, Grzegorz, Dr., 97209 Veitshöchheim (DE); Ackva, Ansgar, Dr., 97082 Würzburg (DE)

(57) **Zusammenfassung**

Um die Drehmomentwelligkeit einer Synchronmaschine (9) mit einfachen Mitteln zu reduzieren, wird ein Ständerkern (18) für eine solche Synchronmaschine (9) angegeben. Der Ständerkern (18) umfasst einen im Wesentlichen hohlzylindrischen Mantel (19), von dem mehrere über den Umfang des Mantels (19) verteilte Polzähne (20) radial nach innen abstehen. In jedem Polzahn (20) ist dabei eine Magnetflusssperre (30) vorgesehen.

## Beschreibung

Die Erfindung bezieht sich allgemein auf eine Synchronmaschine, insbesondere als Antrieb für eine Servolenkung eines Kraftfahrzeugs. Die Erfindung bezieht sich hierbei im Speziellen auf einen Ständerkern für eine solche Synchronmaschine.

Neben hydraulisch betriebenen Servolenkungen werden im Kraftfahrzeugbereich zunehmend elektrisch betriebene Servolenkungen eingesetzt, bei welchen ein Elektromotor zur Aufbringung einer unterstützenden Lenkkraft vorgesehen ist. Die Vorteile elektrisch betriebener Servolenkungen liegen dabei insbesondere darin, dass sich solche Servolenkungen vergleichsweise kompakt realisieren und energiesparend betreiben lassen.

Als Elektromotor wird dabei in der Regel eine permanenterregte Synchronmaschine eingesetzt. Eine solche Synchronmaschine umfasst einen drehbar in einem Ständer angeordneten Läufer, in dem mittels einer Anzahl von Permanentmagneten ein permanentes magnetisches Erregerfeld erzeugt wird. Der Ständer umfasst üblicherweise einen Ständerkern aus einem Elektroblech mit einem etwa hohlzylinderförmigen Mantel, von dem aus eine Anzahl von Polzähnen speichenartig nach innen in Richtung auf den Läufer abstehen. Die Polzähne sind mit Phasenwicklungen bewickelt. Durch Bestromung dieser Phasenwicklungen wird im Betrieb der Synchronmaschine ein magnetisches Ständerdrehfeld erzeugt, das in Wechselwirkung mit dem Erregerfeld ein den Läufer antreibendes Drehmoment erzeugt.

Nachteiligerweise weist dieses Drehmoment stets eine gewisse Welligkeit auf, fluktuiert also in Abhängigkeit Läuferdrehwinkels. Eine durch eine Synchronmaschine unterstützte Lenkung läuft infolge dieser Drehmomentwelligkeit - umgangssprachlich ausgedrückt - in gewissem Umfang "unrund" bzw. "hakt", was im Sinne des Fahrkomforts unbefriedigend ist. Die Drehmomentwelligkeit kann ferner im Betrieb der Servolenkung auch unerwünschte Geräuschentwicklung verursachen.

Aus den Druckschriften DE 198 51 883 A1, EP 0 809 343 B1, JP 10285845 A, JP 10285851 A und JP 2004350345 A ist jeweils eine Synchronmaschine mit einem permanent erregten Läufer bekannt. Um bei einer solchen Synchronmaschine magnetische Streuverluste zu verringern und somit die Nennleistung des Motors zu verbessern, sowie teilweise auch um die Geräuschentwicklung beim Betrieb der Maschine zu verringern, ist in den genannten Druckschriften jeweils vorgeschlagen, an der Peripherie des Läuferblechpakets, insbesondere zwischen einem in den Läufer eingebetteten Permanentmagneten und dem den Läufer umgebenden Luftspalt, eine oder mehrere Magnetflusssperren vorzusehen. Die Magnetflusssperren sind dabei insbesondere durch Schlitze oder Aneinanderreihung von Löchern in dem Läuferblechpaket gebildet.

Der Erfindung liegt die Aufgabe zugrunde, eine Synchronmaschine mit einfachen Mitteln dahingehend zu verbessern, dass im Betrieb der Maschine eine besonders geringe Drehmomentwelligkeit auftritt.

Diese Aufgabe wird erfindungsgemäß gelöst durch die Merkmale des Anspruchs 1. Danach wird ein für eine Synchronmaschine vorgesehener Ständerkern mit einem im Wesentlichen hohlzylindrischen Mantel und mehreren von dem Innenumfang des Mantels nach Art von Speichen radial nach innen abstehenden Polzähnen dahingehend weiterentwickelt, dass in jedem Polzahn mindestens eine Magnetflusssperre vorgesehen ist.

Empirisch hat sich gezeigt, dass die Anbringung von Magnetflusssperren an den Polzähnen des Ständerkerns ein besonders effektives Mittel darstellt, um die in Betrieb der Synchronmaschine auftretende Drehmomentwelligkeit signifikant zu reduzieren. Im Vergleich zu Synchronmaschinen mit herkömmlichem Ständerkern wird die Drehmomentwelligkeit um bis zu etwa 50 % verringert Die oder jede Magnetflusssperre ist dabei bevorzugt nahe an einem radial inneren Ende des jeweils zugeordneten Polzahns angeordnet. Zusätzlich oder alternativ hierzu weist jeder Polzahn in zweckmäßiger Ausgestaltung zwei Magnetflusssperren auf, die bezüglich einer radial-axialen Mittelebene des Polzahns symmetrisch und dabei jeweils nahe an den gegenüberliegenden Seitenwänden des Polzahns angeordnet sind, so dass zwischen jeder Magnetflusssperre und der Mittelebene ein Abstand gebildet ist, der den Abstand der Magnetflusssperre zu der jeweils angrenzenden Seitenwand des Polzahns wesentlich übersteigt.

In an sich herkömmlicher Bauweise weist jeder Polzahn zweckmäßigerweise einen im Profil vergleichsweise dünnen Hals sowie an seinem radial inneren Ende einen gegenüber dem Hals in Umfangsrichtung beidseitig verbreiterten Kopf auf. Jeder Polzahn hat somit im Profil etwa die Form eines auf dem Rahmen fußenden Buchstaben "T". Die infolge der Verbreiterung in beidseitiger Umfangsrichtung jeweils über den Hals hinausstehenden Abschnitte des Kopfes werden im Folgenden jeweils als "Auskragung" bezeichnet.

Bei dieser Ausgestaltung des Ständerkerns hat es sich als besonders vorteilhaft erwiesen, jeweils (mindestens) eine Magnetflusssperre im Bereich jeder Auskragung vorzusehen. Um den radialen Magnetfluss in den Polzähnen möglichst wenig zu behindern, sind die Magnetflusssperren dabei insbesondere vollständig in die jeweilige Auskragung zurückgezogen, so dass die Magnetflusssperren in radialer Richtung nicht mit dem Hals des zugeordneten Polzahns überlappen.

Jede Magnetflusssperre weist bevorzugt einen etwa kreisförmigen oder ovalen Querschnitt auf. Ist die Magnetflusssperre mit einem ovalen Querschnitt versehen, so ist sie bevorzugt mit ihrem maximalen Durchmesser radial bezüglich des Ständerkerns ausgerichtet.

Jede Magnetflusssperre ist in einfacher und zweckmäßiger Ausgestaltung durch eine hohle Ausnehmung in dem Material des zugeordneten Polzahns, insbesondere durch eine Bohrung gebildet. In einer alternativen Ausführung der Erfindung kann die Magnetflusssperre auch durch eine Einlagerung aus einem nicht-magnetischen Material, insbesondere einem Kunststoff, eine Keramik oder einem nicht-ferromagnetischem Metall gebildet sein.

In zweckmäßiger Dimensionierung ist zwischen jeder Magnetflusssperre und einer nächst benachbarten Wand des zugehörigen Polzahns ein Abstand von mindestens 0,2 mm gebildet.

In einer bevorzugten Weiterbildung des Ständerkerns, die einerseits aufgrund der elektrischen Eigenschaften, andererseits aufgrund hoher Stabilität besonders vorteilhaft ist, ist das radial innere Ende jedes Polzahns mit den radial inneren Enden der jeweils benachbarten Polzähne verbunden, so dass die inneren Enden der Polzähne im Profil einen mit dem Mantel konzentrischen inneren Ring bilden.

In weiterer Fortbildung des vorstehend beschriebenen Erfindungsgedankens wird die obige Aufgabe gelöst durch die Merkmale des Anspruchs 9. Danach wird eine Synchronmaschine angegeben, bei der sowohl Ständer als auch Läufer mit Magnetflusssperren versehen sind. Der Ständer umfasst hierbei einen Ständerkern der vorstehend beschriebenen Art. Der in dem Ständer drehbar angeordnete Läufer umfasst ein Läuferblechpaket mit mehreren darin eingelagerten Permanentmagneten. Läuferseitig ist jeweils mindestens eine Magnetflusssperre zwischen jedem Permanentmagnet und einem zwischen Läufer und Ständer gebildeten Luftspalt angeordnet. Die in dem Läuferblechpaket angeordnete Magnetflusssperren weisen hierbei bevorzugt jeweils einen im Wesentlichen kreisförmigen Querschnitt auf. Die läuferseitig angeordneten Magnetflusssperren sind ferner - analog zu den im Ständerkern angeordneten Magnetflusssperren - zweckmäßigerweise durch eine hohle Ausnehmung in dem Läuferblechpaket oder durch eine Einlagerung aus nicht-magnetischem Material gebildet.

In bevorzugter Ausbildung sind zwischen jedem Permanentmagneten des Läufers und dem Luftspalt mindestens zwei, insbesondere vier Magnetflusssperren angeordnet, wobei in zweckmäßiger Dimensionierung zwischen jeweils zwei dieser Magnetflusssperren ein Abstand von mindestens 1 mm gebildet ist. Die in dem Läuferblechpaket angeordneten Magnetflusssperren liegen - zusätzlich oder alternativ zu der vorstehenden Dimensionierungsvorschrift - bevorzugt zu dem umgebenden Luftspalt in einem Abstand von mindestens 0,2 mm.

Die vorstehend beschriebene Synchronmaschine wird vorzugsweise als Antrieb für eine Kraftfahrzeug-Servolenkung verwendet.

Nachfolgend werden Ausführungsbeispiele der Erfindung anhand einer Zeichnung näher beschrieben. Darin zeigen:
- FIG 1: in schematischer Darstellung eine KraftfahrzeugLenkung mit einer elektrisch betriebenen Servolenkung,
- FIG 2: in einem schematischen Querschnitt ein die Servolenkung antreibender Elektromotor mit einem permanent erregten Läufer und einen diesen umgebenden Ständer,
- FIG 3: in einem schematischen Diagramm das Antriebsdrehmoment des Elektromotors, aufgetragen gegen die Läuferstellung,
- FIG 4: in einer gegenüber FIG 2 vergrößerten Detaildarstellung im Querschnitt einen Polzahn des Ständers gemäß FIG 2 sowie einen gegenüberliegenden Teil des Läufers,
- FIG 5: in Darstellung gemäß FIG 4 eine alternative Ausführung des Ständers mit gegenüberliegendem Läufer,
- FIG 6: in einem schematischen Querschnitt eine weitere Ausführungsform des Ständerkerns, und

- FIG 7: in gegenüber FIG 6 vergrößerter Detaildarstellung eine abgewandelte Ausführungsform des Ständerkerns gemäß FIG 6.

Einander entsprechende Teile und Größen sind in allen Figuren stets mit gleichen Bezugszeichen versehen. Weitere Ausgestaltungen und Vorteile der Erfindung folgen aus der Zeichnung sowie der nachfolgenden Beschreibung.

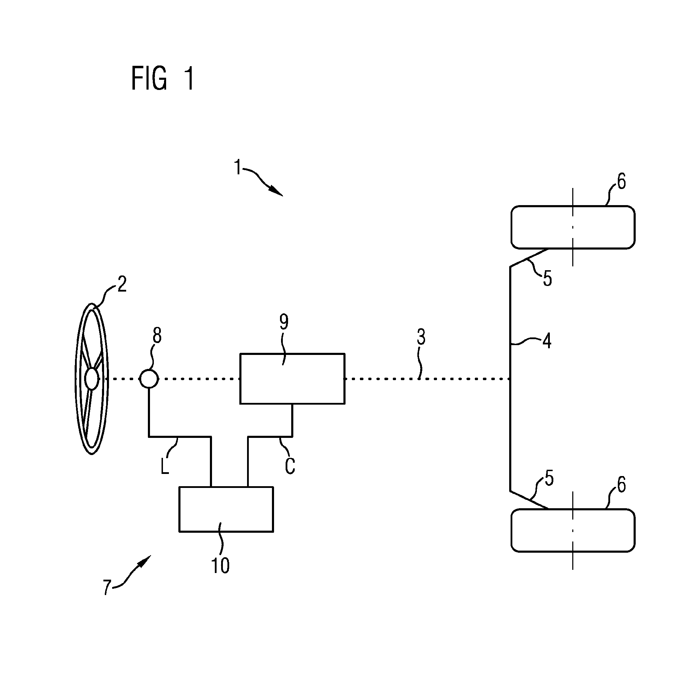

Die in FIG 1 grob schematisch dargestellte Kraftfahrzeug-Lenkung 1 (nachfolgend kurz Lenkung 1) umfasst ein Lenkrad 2, das über eine (in der Zeichnung nur angedeutete) Lenksäule 3 und ein (nicht explizit dargestelltes) Lenkgetriebe auf eine Lenkstange 4 wirkt. Die Lenkstange 4 ist beidseitig über je einen Lenkhebel 5 gelenkig mit der Aufhängung jeweils eines korrespondierenden Rades 6 gekoppelt, so dass in an sich bekannter Weise durch Drehung des Lenkrades 2 ein Einschlag der Räder 6 bewirkt werden kann.

Die Lenkung 1 ist zudem mit einer elektrisch betriebenen Servolenkung 7 ausgestattet. Die Servolenkung 7 umfasst einen Drehmomentsensor 8, der in oder an der Lenksäule 3 angeordnet ist und das von dem Lenkrad 2 auf die Lenksäule 3 ausgeübte Lenkmoment L misst. Den Antrieb der Servolenkung 7 bildet ein Elektromotor 9, der wirkungsmäßig mit der Lenksäule 3 gekoppelt ist. Die Servolenkung 7 umfasst schließlich eine Steuereinheit 10, die das von dem Drehmomentsensor 8 als Messgröße erhobene Lenkmoment L auswertet und den Elektromotor 9 in Abhängigkeit dieser Auswertung durch Abgabe eines Steuersignals C ansteuert. Die Ansteuerung des Elektromotors 9 erfolgt in üblicher Weise derart, dass der Elektromotor 9 ein Hilfsmoment auf die Lenksäule 3 ausübt, das das Lenkmoment L teilweise ausgleicht und somit die auf das Lenkrad 2 aufgebrachte Lenkkraft unterstützt.

Alternativ oder zusätzlich zu einer reinen Lenkkraftverstärkung kann die Servolenkung 7 auch als automatische Lenkung verwendet werden. In diesem Fall steuert die Steuereinheit 10 den Elektromotor 9 unabhängig von dem Lenkmoment L an. Das Lenkrad 2 kann in dieser Ausführung auch entfallen. Weiterhin kann alternativ oder zusätzlich zu dem Elektromotor 9 ein (diesem im Wesentlichen entsprechender und nicht explizit dargestellter) weiterer Elektromotor mit der Lenkstange 4 gekoppelt sein, der ebenfalls von der Steuereinheit 10 angesteuert wird.

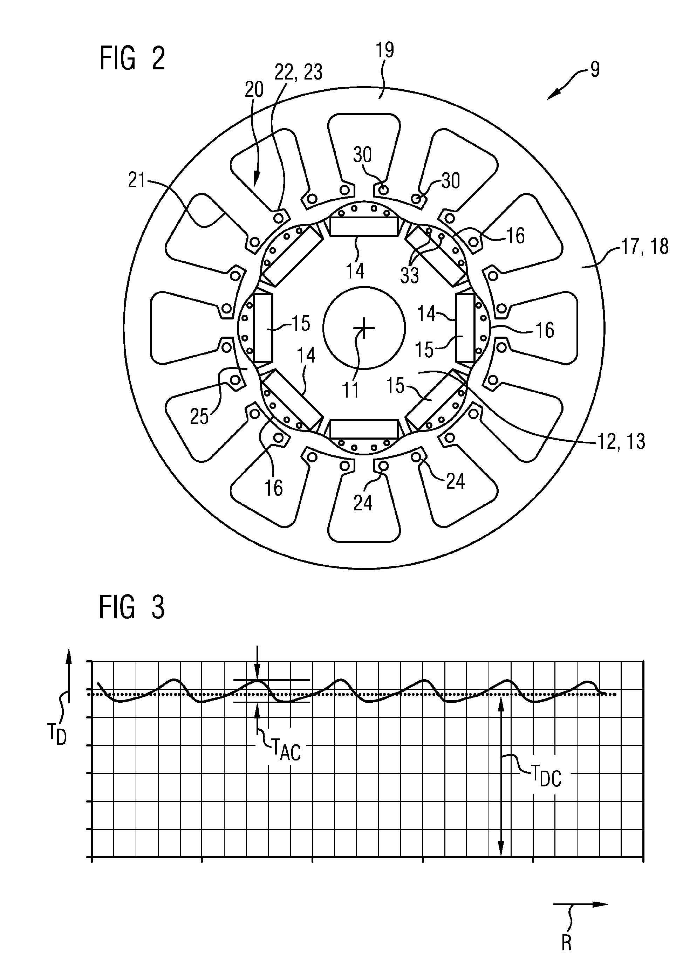

Der in FIG 2 in einem schematischen Querschnitt dargestellte Elektromotor 9 ist als permanenterregte Synchronmaschine ausgebildet. Er umfasst einen rotierbar um eine Drehachse 11 gelagerten Läufer 12. Der Läufer 12 umfasst ein näherungsweise zylindrisches Blechpaket 13 aus einem sogenannten Elektroblech. In die Peripherie des Blechpakets 13 sind acht taschenartige Aufnehmungen 14 eingebracht, die sich im Querschnitt etwa zu dem Rand eines gleichmäßigen Achtecks ergänzen. Jede Ausnehmung 14 dient hierbei zur Aufnahme und Halterung eines Permanentmagneten 15, wobei die Permanentmagnete 15 in stets alternierend wechselnder Polung über den Umfang des Läufers 12 verteilt sind.

Um einen möglichst sinusförmigen Verlauf des von den Permanentmagneten 15 außerhalb des Läufers 12 erzeugten Magnetfelds zu erzielen, weist das Blechpaket 13 - abweichend von einer idealen Zylinderform - jeweils in dem einen jeden Permanentmagnet 15 nach außen hin radial vorgelagerten Bereich eine im Querschnitt konvexe Auswölbung 16 auf. Der Radius des Läufers 12 variiert hierdurch in Umfangsrichtung des Läufers 12 periodisch zwischen einem minimalen und einem maximalen Wert, wobei der minimale Wert jeweils im Bereich zwischen zwei Permanentmagneten 15 und der maximale Wert jeweils in der Polmitte, d.h. im Bereich der radial-axialen Mittelebene eines jeden Permanentmagneten 15 angenommen wird.

Der Elektromotor 9 umfasst weiterhin einen den Läufer 12 umgebenden Ständer 17. Der Ständer 17 umfasst einen Ständerkern 18 aus einem Elektroblech. Der Ständerkern 18 umfasst einen hohlzylindrischen Mantel 19, von dessen Innenumfang aus eine Anzahl von - im dargestellten Beispiel zwölf - Polzähnen 20 nach Art von Speichen radial nach innen in Richtung auf den Läufer 12 abstehen. Die Polzähne 20 sind (in nicht explizit dargestellter Weise) jeweils mit einer Phasenspule bewickelt.

Jeder Polzahn 20 umfasst einen an den Mantel 19 angrenzenden, im Querschnitt vergleichsweise schmalen Hals 21. Ein zu dem Mantel 19 entgegengesetztes, und somit radial inneres Ende 22 jedes Polzahns 20 ist zu einem gegenüber dem Hals 21 in Umfangsrichtung symmetrisch verbreiterten Kopf 23 ausgeformt. Die infolge dieser Verbreiterung in Umfangsrichtung über den Hals 21 hinausragenden Abschnitte des jeweiligen Polzahns sind als Auskragungen 24 bezeichnet.

In der Ausführung des Ständers gemäß FIG 2 sind die Köpfe 23 benachbarter Polzähne 20 jeweils zueinander in Umfangsrichtung beabstandet. Mit anderen Worten sind die zwischen jeweils zwei benachbarten Polzähnen 20 gebildeten Ständernuten nach innen, und somit zum Läufer 12 hin offen.

Zwischen dem Läufer 12 und den radial inneren Enden 22 der Polzähne 20 ist ein Luftspalt 25 gebildet, in dem sich das von dem Läufer 2 erzeugte Erregerfeld sowie ein durch die ständerseitigen Phasenspulen im Betrieb des Elektromotors 9 erzeugtes Ständerdrehfeld aufbauen. Sowohl der Ständerkern 18 als auch der Läufer 12 sind im Übrigen im Wesentlichen als Profilteile ausgebildet, so dass sich das in FIG 2 dargestellte Profil im Wesentlichen über die gesamte axiale Länge des Elektromotors 9 fortsetzt.

FIG 3 zeigt in grob schematischer Darstellung allgemein das Antriebsdrehmoment T_{D} des Elektromotors 9, aufgetragen gegen die Läuferstellung R. Als Antriebsdrehmoment T_{D} wird dabei das Drehmoment bezeichnet, das der Läufer 12 im Betrieb des Elektromotors 9 auf eine mit diesem verbundene Antriebswelle überträgt. Als Läuferstellung R wird der Drehwinkel des Läufers 12 gegenüber dem Ständer 17 bezeichnet.

Wie FIG 3 entnehmbar ist, ist das Antriebsdrehmoment T_{D} eine fluktuierende Funktion der Läuferstellung R. Das Antriebsdrehmoment T_{D} ist daher charakterisiert durch die der Schwingungsamplitude entsprechende Drehmomentwelligkeit T_{AC} (torque ripple), sowie durch das dem Mittelwert der Schwingung entsprechende statische Drehmoment T_{DC}.

Die Drehmomentwelligkeit T_{AC} des Elektromotors 9 führt dazu, dass auch die durch Betätigung der Lenkung 1 aufzubringende Kraft mit dem Lenkeinschlag fluktuiert, dass also aus Sicht eines Fahrzeugnutzers die Lenkung "unrund" läuft bzw. "hakt". Im Sinne eines verbesserten Bedienkomforts der Lenkung 1 ist es daher wünschenswert, die Drehmomentwelligkeit T_{AC} zu minimieren.

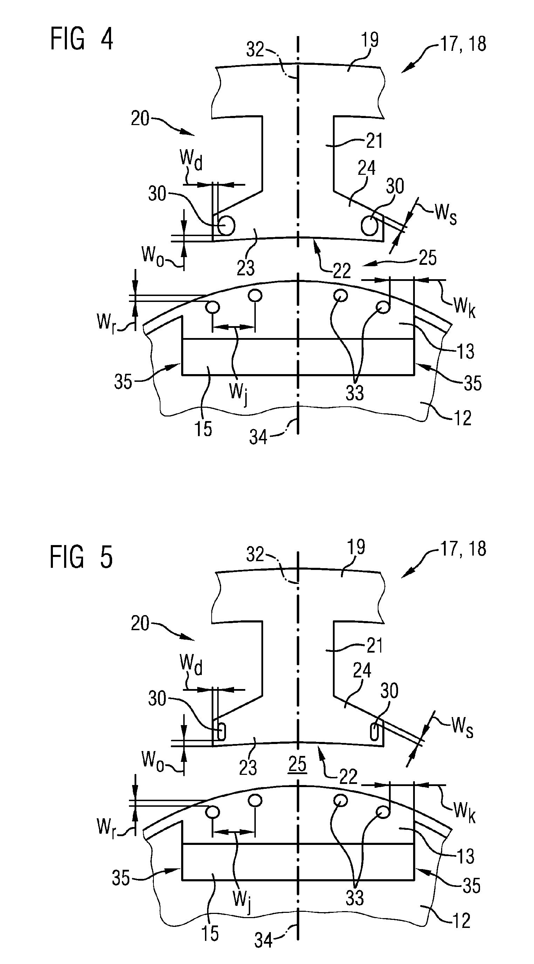

Zu diesem Zweck sind bei dem in FIG 2 dargestellten Ständerkern 18 in dem Kopf 23 eines jeden Polzahns 20 je zwei Magnetflusssperren 30 vorgesehen, die in verschiedener Ausführung in den FIG 4 und FIG 5 näher dargestellt sind.

Jede Magnetflusssperre 30 ist durch eine in axialer Richtung in den Ständerkern 18 eingebrachte hohle Bohrung mit - je nach Ausführung - kreisrundem bis schlitzartig ovalem Querschnitt gebildet, wobei die Magnetsperren gegebenenfalls mit der längeren Seite bevorzugt in radialer Richtung bezüglich des Ständerkerns 18 ausgerichtet sind.

Die beiden pro Polzahn 20 vorgesehenen Magnetflusssperren 30 sind symmetrisch zu einer radial-axialen Mittelebene 32 des Polzahns 20 angeordnet und vollständig in die Auskragungen 24 zurückgezogen. Die Magnetflusssperren 30 sind hierdurch insbesondere nahe an dem radial inneren Ende 22 des Polzahns 20 sowie nahe an den den Pohlzahn 20 in Umfangsrichtung begrenzenden Seitenwänden angeordnet. In bevorzugter Dimensionierung des Ständerkerns 18 gemäß FIG 4 oder FIG 5 ist zwischen jeder Magnetflusssperre 30 und einer das Ende 22 bildenden Innenwand des Polzahns 20 ein Abstand Wₒ von mehr als 0,2 mm, zwischen jeder Magnetflusssperre 30 und einer angrenzenden Seitenwand des Kopfes 23 ein Abstand W_{d} von mehr als 0,2 mm und zwischen jeder Magnetflusssperre 30 und einer Außenwand des Kopfes 23 ein Abstand Wₛ von mehr als 0,2 mm gebildet. Zu der konkreten Definition der Abstände Wₒ, W_{d} und Wₛ wird im Übrigen ergänzend auf die FIG 4 und 5 verwiesen.

In den in den FIG 2, 4 und 5 dargestellten Ausführungsbeispielen ist zur weiteren Reduzierung der Drehmomentwelligkeit T_{D} der Läufer 12 mit weiteren Magnetflusssperren 33 versehen. Diese Magnetflusssperren 33 sind durch hohle Bohrungen mit etwa kreisrundem Querschnitt gebildet, die in das Blechpaket 13 eingebracht sind. Es sind hierbei pro Permanentmagnet 15 jeweils vier Magnetflusssperren 33 vorgesehen. Diese Magnetflusssperren 33 sind zwischen dem zugehörigen Permanentmagneten 15 und dem Außenumfang des Läufers 12 (und somit dem Luftspalt 25) nahe an dem Außenumfang des Läufers 12 angeordnet. Hierbei sind jeweils zwei dieser Magnetflusssperren 33 symmetrisch beidseitig einer radial-axialen Mittelebene 34 des jeweiligen Permanentmagneten 15 angeordnet.

In bevorzugter Dimensionierung ist zwischen je zwei benachbarten Magnetflusssperren 33 jeweils ein Abstand von Wⱼ von 1 mm, zwischen jeder Magnetflusssperre 33 und dem Außenumfang des Läufers 12 ein Abstand Wᵣ von mindestens 0,2 mm und zwischen den beiden äußeren Magnetflusssperren 33 einer einem Permanentmagneten 15 zugeordneten Vierergruppe von Magnetflusssperren 33 und einem benachbarten Polende 35 des Permanentmagneten 15 ein Abstand Wₖ von mindestens 0,2 mm gebildet. Als Polende 35 wird hierbei der den Permanentmagneten 15 in Umfangsrichtung begrenzende Rand bezeichnet. Zu der konkreten Definition der Abstände Wᵣ, Wⱼ und Wₖ wird im Übrigen ergänzend auf die FIG 4 und 5 verwiesen.

Bei nicht näher dargestellten weiteren Ausführungsformen der Erfindung ist der in den FIG 2, 4 und 5 dargestellte Ständer 17 abweichend in Kombination mit einem Läufer mit gegenüber FIG 2, 4 und 5 modifizierten Magnetflusssperren oder in Kombination mit einem Läufer ohne Magnetflusssperren eingesetzt.

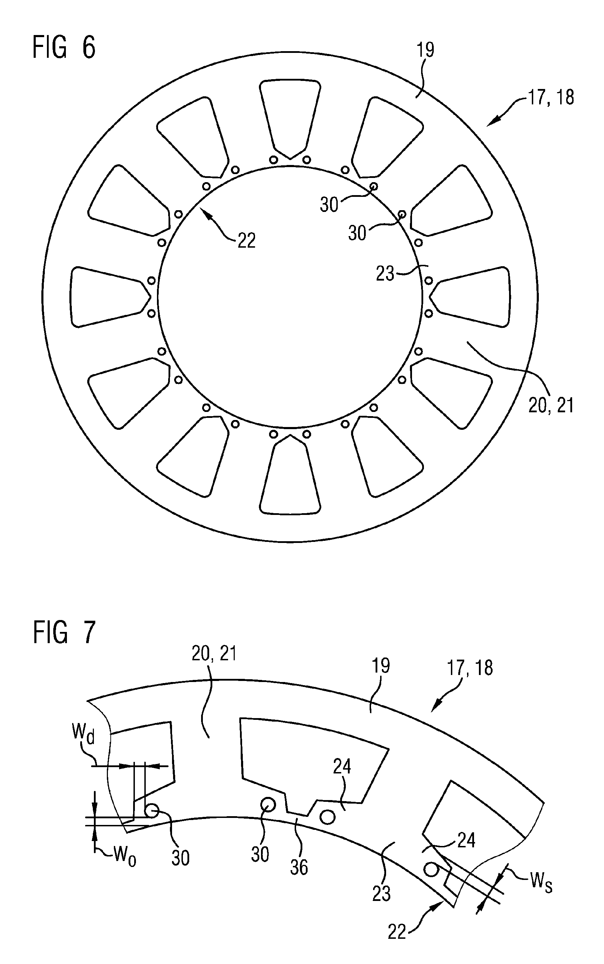

FIG 6 zeigt eine alternative Ausführungsform des Ständers 17. In dieser Ausführungsform unterscheidet sich der Ständerkern 18 von den im Zusammenhang mit den FIG 2, 4 und 5 beschriebenen Ausführungsformen dahingehend, dass der Kopf 23 eines jeden Polzahns 20 mit den Köpfen 23 der benachbarten Polzähne 20 verbunden ist, so dass das radial innere Ende 22 der Polzähne 20 einen zum Mantel 19 konzentrischen, geschlossenen Ring bildet. Die in FIG 6 gezeigte Ausführung des Ständers 17 gleicht ansonsten der in Zusammenhang mit FIG 2 beschriebenen Ausführungsform. Insbesondere sind - wie vorstehend beschrieben - in dem Kopf 23 eines jeden Polzahns 20 je zwei Magnetflusssperren 30 angeordnet.

Eine konkrete Ausführungsform des in FIG 6 dargestellten Konstruktionsprinzips ist in FIG 7 in näherem Detail gezeigt. Bei dieser Ausführungsform sind die benachbarten Polzähne 20 im Bereich der jeweiligen Köpfe 23 jeweils durch eine Brücke 36 aus Elektroblech magnetflusstechnisch verbunden, wobei diese Brücken hinsichtlich ihrer radialen Ausdehnung wesentlich dünner sind als die Köpfe 23 der benachbarten Polzähne 20. In Hinblick auf die bevorzugte Dimensionierung und Anordnung der Magnetflusssperren 30 gleicht die Ausführungsform des in FIG 7 dargestellten Ständerkerns 18 ansonsten der Ausführungsform gemäß FIG 4 oder 5. Insbesondere können die Magnetflusssperren 30 bei einem gemäß FIG 6 oder 7 innenseitig geschlossenen Ständerkern 18 auch - wie in FIG 5 gezeigt - schlitzartig oval ausgebildet sein.

Der gemäß FIG 6 oder 7 innenseitig geschlossene Ständerkern 18 wird im Sinne der Erfindung wahlweise in Kombination mit dem in den FIG 2, 4 und 5 gezeigten Läufer 12, mit einem Läufer mit gegenüber FIG 2, 4 und 5 modifizierten Magnetflusssperren oder in Kombination mit einem Läufer ohne Magnetflusssperren eingesetzt.

## Patentansprüche

1. Ständerkern (18) für eine Synchronmaschine (9) mit einem im Wesentlichen hohlzylindrischen Mantel (19), von dem mehrere über den Innenumfang des Mantels (19) verteilte Polzähne (20) radial nach innen abstehen, wobei in jedem Polzahn (20) eine Magnetflusssperre (30) vorgesehen ist.

2. Ständerkern (18) nach Anspruch 1, wobei die Magnetflusssperre (30) jeweils nahe an einem radial inneren Ende (22) des zugeordneten Polzahns (20) angeordnet ist.

3. Ständerkern (18) nach Anspruch 1 oder 2, wobei jeder Polzahn (20) zwei Magnetflusssperren (30) aufweist, die zueinander symmetrisch bezüglich einer radial-axialen Mittelebene (32) des Polzahns (20) jeweils nahe an gegenüberliegenden Seitenwänden des Polzahns (20) angeordnet sind.

4. Ständerkern (18) nach einem der Ansprüche 1 bis 3, wobei jeder Polzahn (20) an seinem radial inneren Ende (22) einen gegenüber einem Hals (21) des Polzahns (20) verbreiterten Kopf (23) mit zwei in Umfangsrichtung entgegengesetzt zueinander über den Hals (21) hinausstehenden Auskragungen (24) aufweist, und wobei jeweils eine Magnetflusssperre (30) in jeder Auskragung (24) angeordnet ist.

5. Ständerkern (18) nach einem Ansprüche 1 bis 4, wobei jede Magnetflusssperre (30) einen kreisförmigen oder ovalen Querschnitt aufweist.

6. Ständerkern (18) nach einem der Ansprüche 1 bis 5, wobei jede Magnetflusssperre (30) durch eine hohle Ausnehmung im Material des zugeordneten Polzahns (20), insbesondere eine Bohrung, oder durch eine Einlagerung aus nicht-magnetischem Material gebildet ist.

7. Ständerkern (18) nach einem der Ansprüche 1 bis 6, wobei zwischen jeder Magnetflusssperre (30) und einer angrenzenden Wand des zugehörigen Polzahns (20) ein Abstand (W_{d}, Wₒ, Wₛ) von mindestens 0,2 mm gebildet ist.

8. Ständerkern (18) nach einem der Ansprüche 1 bis 7, wobei jeder Polzahn (20) mit seinem radial inneren Ende (22) mit radial inneren Enden (22) der benachbarten Polzähne (20) verbunden ist.

9. Synchronmaschine (9) mit einem Ständer (17), der einen Ständerkern (18) nach einem der Ansprüche 1 bis 8 umfasst, sowie mit einem in dem Ständer (18) drehbar angeordneten Läufer (12), der ein Läuferblechpaket (13) mit mehreren eingelagerten Permanentmagneten (15) umfasst, wobei in dem Läuferblechpaket (13) zwischen jedem Permanentmagneten (15) und einem zwischen Läufer (12) und Ständer (17) gebildeten Luftspalt (25) mindestens eine Magnetflusssperre (33) angeordnet ist.

10. Synchronmaschine (9) nach Anspruch 9, wobei die im Läuferblechpaket (13) angeordneten Magnetflusssperren (33) einen im Wesentlichen kreisförmigen Querschnitt aufweist.

11. Synchronmaschine (9) nach Anspruch 9 oder 10, wobei zwischen jedem Permanentmagneten (15) und dem Luftspalt (25) mindestens zwei, insbesondere vier Magnetflusssperren (33) angeordnet sind.

12. Synchronmaschine (9) nach Anspruch 11, wobei im Läuferblechpaket (13) pro Permanentmagnet (15) mindestens zwei Magnetflusssperren (33) vorgesehen sind, zwischen denen ein Abstand (Wⱼ) von mindestens 1 mm gebildet ist.

13. Synchronmaschine (9) nach einem der Ansprüche 9 bis 12, wobei zwischen jeder im Läuferblechpaket (13) angeordneten Magnetflusssperre (33) und dem Luftspalt (25) ein Abstand (Wᵣ) von mindestens 0,2 mm gebildet ist.
